(19)

**Europäisches Patentamt**
**European Patent Office**
**Office européen des brevets**

(11) **EP 4 317 085 B1**

(12) **EUROPEAN PATENT SPECIFICATION**

(45) Date of publication and mention
of the grant of the patent:
**03.06.2026  Bulletin 2026/23**

(21) Application number: **22780679.1**

(22) Date of filing: **28.03.2022**

(51) International Patent Classification (IPC):
**B01D 61/02** (2006.01)  **B01D 61/04** (2006.01)
**C02F 9/00** (2023.01)  C02F 1/44 (2023.01)
C02F 1/66 (2023.01)  C02F 1/52 (2023.01)
C02F 1/56 (2023.01)  C02F 103/18 (2006.01)
C02F 1/04 (2023.01)

(52) Cooperative Patent Classification (CPC):
(C-Sets available)
**B01D 61/025; B01D 61/04; C02F 9/00;**
B01D 2311/04; B01D 2311/18; B01D 2311/2642;
B01D 2311/2643; C02F 1/04; C02F 1/441;
C02F 1/444; C02F 1/5245; C02F 1/56; C02F 1/66;
C02F 2001/007; C02F 2001/5218;  (Cont.)

(86) International application number:
**PCT/JP2022/014810**

(87) International publication number:
**WO 2022/210468 (06.10.2022 Gazette 2022/40)**

(54) **WASTE WATER VOLUME REDUCTION PROCESS**

VERFAHREN ZUR REDUZIERUNG DES ABWASSERVOLUMENS

PROCÉDÉ DE RÉDUCTION DE VOLUME D'EAUX USÉES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.03.2021  JP 2021057910**

(43) Date of publication of application:
**07.02.2024  Bulletin 2024/06**

(73) Proprietor: **Mitsubishi Heavy Industries, Ltd.**
**Tokyo 100-8332 (JP)**

(72) Inventors:
• **MATSUKAWA, Kyohei**
**Tokyo 100-8332 (JP)**
• **KIYOSAWA, Masashi**
**Tokyo 100-8332 (JP)**

• **ITO, Yoshiaki**
**Tokyo 100-8332 (JP)**
• **KAMITO, RYO**
**Tokyo 100-8332 (JP)**
• **TAKEUCHI, Kazuhisa**
**Tokyo 100-8332 (JP)**

(74) Representative: **Studio Torta S.p.A.**
**Via Viotti, 9**
**10121 Torino (IT)**

(56) References cited:
WO-A1-2017/133511    JP-A- 2003 170 174
JP-A- 2015 128 754    JP-A- 2017 136 570
JP-A- H10 137 540    JP-A- H10 137 540
US-A1- 2015 068 982    US-A1- 2019 077 686

(52) Cooperative Patent Classification (CPC): (Cont.)
C02F 2103/18; C02F 2303/16; C02F 2303/22

C-Sets
B01D 2311/04, B01D 2311/18, B01D 2311/2642;
B01D 2311/04, B01D 2311/2643, B01D 2311/2642,
B01D 2311/18

# EP 4 317 085 B1

## Description

### TECHNICAL FIELD

The present invention relates to a method for treating high hardness water containing calcium and magnesium, such as a waste water discharged from wet desulphurization. Specifically, the present invention relates to an apparatus and method for treating high hardness water using reverse osmosis membrane, which can reduce operating costs, by effective flocculation sedimentation or the like which can be performed even if an amount of chemical added is small and preventing scale and fouling in the reverse osmosis membrane which reduces a replacement frequency of the reverse osmosis membrane.

### BACKGROUND ART

High hardness water such as a waste water discharged from flue gas desulfurization equipment (hereinafter referred to as "desulfurization waste water") contains various elements and must be treated so that the levels are below environmental regulation values of the elements. As a method for the treatment, known is a method comprising concentrating a desulfurization waste water using a reverse osmosis membrane to obtain a concentrated water and evaporating the concentrated water to dryness to recover solids. This method requires a large amount of thermal energy for the evaporation. Also, in order to prevent the reverse osmosis membrane from scale and fouling, chemicals such as alkaline agents, coagulants, scale preventives, fouling inhibitors or the like are added (Patent Document 1, etc.). Addition of such chemicals will increase the operating costs.

In order to reduce the amount of chemicals added, a technique has been proposed in which a part of the concentrated water obtained by the reverse osmosis membrane is returned to the crystallization reaction tank or the coagulation sedimentation tank to facilitate crystallization or coagulation sedimentation.

For example, Patent Document 2 describes a water treatment method for dividing a raw water containing calcium ions and sulfate ions into a treated water and a concentrated water using a permeable membrane device, characterized in that the water treatment method comprises : returning the concentrated water to a raw water tank through a crystallization reaction tank and a sedimentation tank; adding, in the crystallization reaction tank, calcium sulfate seed crystals to a concentrated liquid to crystallize calcium ions and sulfate ions in the concentrated liquid into calcium sulfate crystals; precipitating, in the sedimentation tank, the calcium sulfate crystals in the concentrated water sent from the crystallization reaction tank; returning the supernatant to the raw water tank;

collecting a part of the calcium sulfate crystals precipitated in the sedimentation tank as the calcium sulfate seed crystals in the crystallization reaction tank; and discharging the remainder of the calcium sulfate crystals precipitated in the sedimentation tank out of the system.

Patent document 3 discloses a water treatment method for removing calcium from raw water, comprising : a reaction step for obtaining a reaction solution containing calcium carbonate and no coagulant from a raw water; a membrane separation step for separating the reaction solution into a permeated liquid and a concentrated liquid by a filtration membrane; and a concentrated liquid discharge step for discharging a part of the concentrated liquid out of the system, wherein, in the reaction step, at least part of the concentrated liquid obtained in the membrane separation step is circulated to be mixed with the reaction solution, the reaction solution is adjusted to alkalinity, and a minimum particle size of the calcium carbonate in the reaction solution is controlled so as to be larger than an average pore size of the filtration membrane. Further relevant documents are US 2015/068982 A1 and WO 2017/133511 A1.

### PRIOR ART LITERATURES

### PATENT LITERATURES

Patent Document 1 : JP S51-93789 A
Patent Document 2 : JP 2011-200788 A (JP 5303501 B)
Patent Document 3 : JP 2017-136570 A
Patent Document 4: JPH10137540A
Patent Document 5: US2019077686A1

### SUMMARY OF THE INVENTION

PROBLEMS TO BE RESOLVED BY THE INVENTION

An object of the present invention is to provide a method involving treatment of high hardness water using reverse osmosis membrane, which can reduce operating costs, by effective flocculation sedimentation or the like which can be performed even if an amount of chemicals added is small and preventing scale and fouling in the reverse osmosis membrane which reduces a replacement frequency of the reverse osmosis membrane.

MEANS FOR SOLVING THE PROBLEMS

In order to solve the above problems, the present invention provides a method, whereby its essential features are set out in independent method claim 1. Further, preferred embodiments are described in dependent claims 2-3.

ADVANTAGEOUS EFFECTS OF THE INVENTION

The treatment method in the present invention, can reduce operating costs, by effective flocculation sedimentation or the like which can be performed even if an amount of chemicals added is small and preventing scale and fouling in the reverse osmosis membrane which reduces a replacement frequency of the reverse osmosis membrane.

BRIEF DESCRIPTION OF THE DRAWINGS

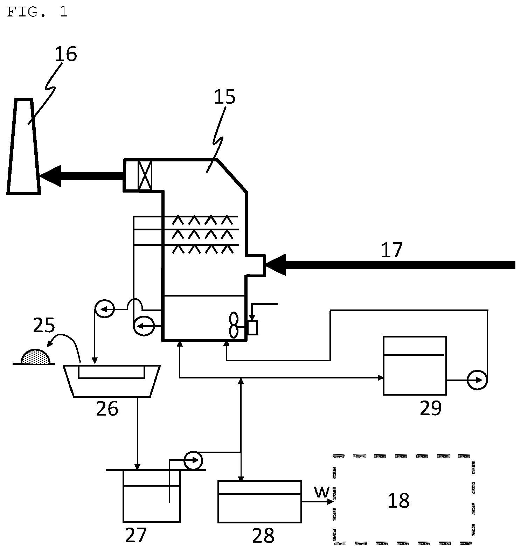

[FIG. 1] is a diagram showing an example of a wet desulfurization device. The apparatus in the drawings does not form part of the current invention.

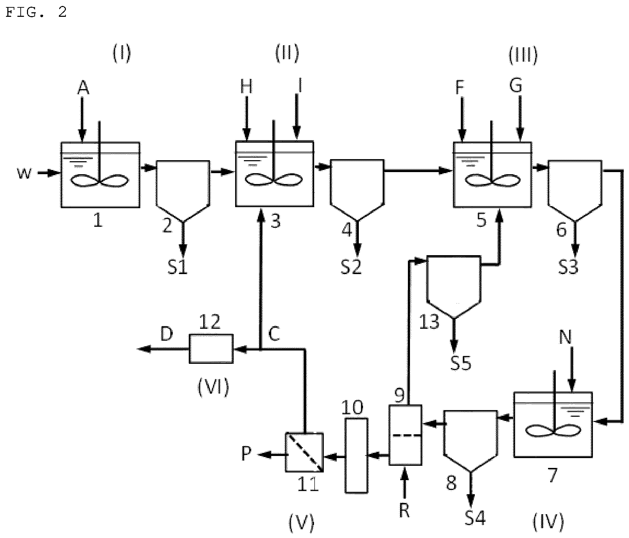

[Fig. 2] is a diagram showing an example of the high hardness water treatment apparatus

[Fig. 3] is a diagram showing another example of the high hardness water treatment apparatus

[Fig. 4] is a diagram showing another example of the high hardness water treatment apparatus

[Fig. 5] is a diagram showing another example of the high hardness water treatment apparatus

[Fig. 6] is a diagram showing another example of the high hardness water treatment apparatus

EMBODIMENTS FOR CARRYING OUT THE INVENTION

The method for treating high hardness water in the present invention comprises a pH adjustment step, a crystallization step, a first flocculation sedimentation step, and a membrane separation step, and optionally a second flocculation separation step. The high hardness water treatment apparatus not forming part of the present invention comprises a pH adjustment device, a crystallization device, a first flocculation sedimentation device and a reverse osmosis membrane device, and, if necessary, a second flocculation sedimentation device. In the high hardness water treatment apparatus not forming part of the present invention, flow paths are respectively provided between the devices so that a liquid to be treated flows in the order corresponding to the pH adjustment device, the crystallization device, the first flocculation sedimentation device, the second flocculation sedimentation device as necessary, and the reverse osmosis membrane device. Further, a flow path is provided for supplying part or all of a concentrated water from the reverse osmosis membrane device to the crystallization device. A flow path is optionally provided for supplying the remainder of the concentrated water to an evaporation to dryness device.

As the high hardness water containing calcium and magnesium, mentioned can be desulfurization waste water, seawater, cooling tower blow effluent, landfill leachate, groundwater, or mine waste water. From the viewpoint of a treatment amount, the present invention is preferably applied to desulfurization waste water. The high hardness water applied to the present invention has a water hardness of usually not less than 60 mg/l, preferably not less than 180 mg/l, more preferably not less than 357 mg/l, still more preferably not less than 1000 mg/l, and even more preferably not less than 3000 mg/l, most preferably not less than 5000 mg/l. The water hardness is obtained by converting a calcium amount and a magnesium amount into a calcium carbonate ($CaCO_3$) amount, and can be calculated by the following formula.

Water Hardness [mg/l] = (calcium amount [mg/l] $\times$ 2.5) + (magnesium amount [mg/l] $\times$ 4.1)

Flue gas desulfurization is performed by passing flue gas through a wet flue gas desulfurization device. Typical examples of a method for wet flue gas desulfurization can include lime-gypsum method, magnesium hydroxide method, soda method and the others. The wet flue gas desulfurization device used in the present invention comprises a gas absorbing device 15 capable of contacting flue gas with a water slurry containing limestone ($CaCO_3$), slaked lime ($Ca(OH)_2$), quicklime (CaO) or the like and further comprises a device 26 for separating and removing gypsum. The gas absorbing device can be a packed tower, a wet wall tower, a spray tower, or the like. With the gas absorbing device, sulfur oxides in the flue gas react with limestone, slaked lime or quicklime in the water slurry to generate calcium sulfite, which is oxidized to obtain calcium sulfate (gypsum). The gypsum is separated and removed from a gypsum slurry (an aqueous slurry containing calcium) discharged from the gas absorbing device with the device for separating and removing gypsum. A gypsum removed colature (an aqueous solution containing calcium) is discharged by the separation and removal of the gypsum.

Calcium, magnesium, silica, etc. contained in high hardness water such as desulfurization waste water solidify to produce scale. In addition, in desulfurization device, etc., cyclic usage or the like of water often leads to high COD and high BOD of high hardness water. Therefore, fouling is likely to occur in the reverse osmosis membrane.

The pH adjustment step (I) is composed of adding an alkali metal hydroxide or water-soluble alkaline earth metal hydroxide A to a high hardness water to obtain a precipitated product S1 and removing the precipitated product S1. The pH adjustment device configured to facilitate the pH adjustment step comprises a reaction tank 1, a solid-liquid separation device (for example, a sedimentation tank 2), a flow path for supplying an alkali metal hydroxide or water-soluble alkaline earth metal hydroxide A to the reaction tank 1, a flow path for supplying a high hardness water to the reaction tank 1, a flow path for transferring a liquid from the reaction tank 1 to the solid-liquid separation device, and a flow path for discharging a liquid from the solid-liquid separation device. In the device in which the reaction tank 1 and the solid-liquid separation device are integrated, the flow path for transferring the liquid from the reaction tank 1 to the solid-liquid separation device can be omitted.

Examples of the alkali metal hydroxide to be used in the pH adjustment step can include sodium hydroxide, potassium hydroxide or the like. Among these, sodium hydroxide is preferred. Examples of the water-soluble alkaline earth metal hydroxide to be used in the pH adjustment step can include calcium hydroxide, strontium hydroxide or the like. Among these, calcium hydroxide is preferred. The alkali metal hydroxide or water-soluble alkaline earth metal hydroxide A can be added in the form of powder, granules, flakes, or an aqueous solution.

The addition of the alkali metal hydroxide or water-soluble alkaline earth metal hydroxide is carried out in such an amount that the high hardness water will have a pH of 9.5 to 11.5.

The addition of the alkali metal hydroxide or water-soluble alkaline earth metal hydroxide mainly causes magnesium contained in the high hardness water to be precipitated as magnesium hydroxide. Furthermore, precipitation of Si, Al or the like contained in the high hardness water is induced. As a temperature of the solution is higher, the solubility of magnesium hydroxide is lower to make them easier to precipitate. On the other hand, when the temperature of the solution is high, convection tends to occur due to the influence of the surrounding environment, and the efficiency of gravity solid-liquid separation may decrease.

The precipitated product is removed by the solid-liquid separation device. As the solid-liquid separation device, mentioned can be decantation equipment (overflow type decantation equipment, skimming type decantation equipment, etc.), filter cloth bag, screw press, roller press, rotary drum screen, belt screen, vibration screen, multi-plate wave filter, vacuum dewatering equipment, pressure dewatering equipment, belt press, cyclone-type solid-liquid separator (liquid cyclone), centrifugal concentration dehydrator, multi-disk dehydrator, or the like. A part of the precipitated product removed may be returned to the reaction tank 1 for use as seed crystal. The addition of seed crystal can increase a size of the precipitated product to facilitate the solid-liquid separation. A slurry of the precipitated product S1 obtained by the solid-liquid separation can be subjected to evaporation to dryness together with the concentrated water.

The liquid from which the precipitated product have been removed contains a large amount of calcium compounds that could not be removed in the pH adjustment step. In addition, it may contain compounds that are highly soluble under high pH.

In the crystallization step (II), part of the concentrated water described later, an inorganic acid H, and optionally a seed gypsum I are added to the liquid from which the precipitated product has been removed to obtain a crystallized product S2, and the crystallized product S2 is removed from the liquid. The concentrated water contains calcium ions and sulfate ions in supersaturation state. In the crystallization step (II), gypsum (calcium sulfate) is precipitated from the concentrated water in supersaturation state. In order to facilitate the precipitation of gypsum, it is preferable to add seed gypsum, particularly at the initial stage of the operation. Also, as the seed gypsum, it is possible to use gypsum (25) produced in wet flue gas desulfurization device. The crystallization device for facilitate progress of the crystallization step comprises a reaction tank 3, a solid-liquid separation device (for example, a sedimentation tank 4), a flow path for supplying the inorganic acid to the reaction tank 3, a flow path for supplying the liquid from which the precipitated product has been removed to the reaction tank 3, a flow path for supplying the concentrated water C to the reaction tank 3, a flow path for transferring the liquid from the reaction tank 3 to the solid-liquid separation device, and a flow path for discharging the liquid from the solid-liquid separation device. In the device in which the reaction tank 3 and the solid-liquid separation device are integrated, a flow path for transferring the liquid from the reaction tank 3 to the solid-liquid separation device can be omitted.

Examples of the inorganic acids to be used in the crystallization step (II) can include hydrochloric acid, nitric acid, sulfuric acid, phosphoric acid or the like. Among these, hydrochloric acid is preferred. The inorganic acid H can be added in the form of aqueous solution. On the other hand, the concentrated water contains a high concentration of calcium. The concentrated water preferably contains calcium in a supersaturation state.

The inorganic acid and the concentrated water are added in such amounts that a pH of the liquid does not fall less than 2.5. In other word, the addition of the inorganic acid and the concentrated water is carried out in such amounts that the pH of the liquid is within the range having the upper limit being the pH of the liquid obtained in the pH adjustment step and the lower limit being 2.5. As a result, a crystallized product S2 containing calcium sulfate as a main component is precipitated. A crystallized product is removed by a solid-liquid separation device. As the solid-liquid separation device, mentioned can be the same devices as described above. A part of the crystallized product removed may be returned to the reaction tank 3 as seed crystal.

In the crystallization step, if necessary, an iron-based flocculant G is added to the liquid from which the precipitated product has been removed. Examples of the iron-based flocculant can include ferric chloride, polyferric sulfate, polysilica iron or the like. Among these, ferric chloride is preferred. The iron-based flocculant can be added in the form of powder, granules, flakes, dispersion or aqueous solution. The addition of the iron-based flocculant may facilitate the crystallization.

In the first flocculation sedimentation step (III), an iron-based flocculant F is added to the liquid from which the crystalized product has been removed to obtain first flocs S3, and the first flocs S3 are removed. The first flocculation sedimentation device for facilitating progress of the first flocculation sedimentation step comprises a reaction tank 5, a solid-liquid separation device (for example, a sedimentation tank 6), a flow path for supplying the iron-based flocculant to the reaction tank 5, a flow path for supplying the liquid from which the crystalized product has been removed to the reaction tank 5, a flow path for transferring the liquid from the reaction tank 5 to the solid-liquid separation device and a flow path for discharging the liquid from the solid-liquid separation device. In the device in which the reaction tank 5 and the solid-liquid separation device are integrated, the flow path for transferring the liquid from the reaction tank 5 to the solid-liquid separation device can be omitted. In addition, since the first flocs formed in the first flocculation sedimentation step (III) can be removed together with the second flocs by the solid-liquid separation device in the following second flocculation sedimentation step, the solid-liquid separation device (for example, sedimentation tank 6) provided in the first flocculation sedimentation device may be omitted.

Examples of the iron-based flocculant to be used in the first flocculation sedimentation step (III) can include ferric chloride, polyferric sulfate, polysilica iron or the like. Among these, ferric chloride is preferred. The iron-based flocculant F can be added in the form of powder, granules, flakes, dispersion or aqueous solution.

The iron-based flocculant is added in such amounts that a pH of the liquid becomes 2.5 to 4.5. This causes the fine particles to be flocculated and form the first flocs. The first flocs are removed by a solid-liquid separation device. As the solid-liquid separation device, mentioned can be the same devices as described above. A part of the removed first flocs may be returned to the reaction tank 5 for use as seed crystals.

In the first flocculation sedimentation step, if necessary, an inorganic acid may be added to the liquid from which the crystallized product has been removed. Examples of the inorganic acid can include hydrochloric acid, nitric acid, sulfuric acid, and phosphoric acid. Among these, hydrochloric acid is preferred. The addition of the inorganic acid may facilitate the flocculation.

In the first flocculation sedimentation step, as needed, a polymer coagulant G may be added to the liquid from which the crystalized product has been removed. Examples of the polymer coagulant can include an anionic polymer coagulant, a nonionic polymer coagulant, a cationic polymer coagulant, or an amphoteric polymer coagulant. The polymer coagulant G can be added in the form of powder, granules, flakes, dispersion or aqueous solution. The addition of the polymer coagulant may facilitate coarsening of the first flocs. The liquid from which the first flocs have been removed can be sent to the membrane separation step (V) as the raw water.

The liquid from which the first flocs have been removed may contain compounds that are highly soluble under low pH. In addition, fine particles that could not be removed in the first flocculation sedimentation step may be floating. In such cases, a second flocculation sedimentation step (IV) may be performed.

In the second flocculation sedimentation step (IV), an alkali metal hydroxide or water-soluble alkaline earth metal hydroxide N is added to the liquid from which the first flocs have been removed to obtain second flocs S4 and the second flocs S4 are removed. The second flocculation sedimentation device for facilitating progress of the second flocculation sedimentation step comprises a reaction tank 7 and a solid-liquid separation device (eg, sedimentation tank 8), a flow path for feeding the alkali metal hydroxide or water-soluble alkaline earth metal hydroxide N to the reaction tank 7, a flow path for feeding the liquid from which the first flocs have been removed to the reaction tank 7, and a flow path for transferring a liquid from the reaction tank 7 to the solid-liquid separation device, and a flow path for discharging a liquid from the solid-liquid separation device. In the device in which the reaction tank 7 and the solid-liquid separation device are integrated, the flow path for transferring the liquid from the reaction tank to the solid-liquid separation device can be omitted.

Examples of the alkali metal hydroxide to be used in the second flocculation sedimentation step (IV) can include sodium hydroxide, potassium hydroxide or the like. Among these, sodium hydroxide is preferred. Examples of the water-soluble alkaline earth metal hydroxide to be used in the second flocculation sedimentation step (IV) can include calcium hydroxide, strontium hydroxide or the like. Among these, calcium hydroxide is preferred. The alkali metal hydroxide or water-soluble alkaline earth metal hydroxide N can be added in the form of powder, granules, flakes, or an aqueous solution.

Addition of the alkali metal hydroxide or water-soluble alkaline earth metal hydroxide is carried out in such amount that a pH of the liquid becomes 4.5 to 6.5. This causes the fine particles to be flocculated and to form the second flocs. The second flocs are removed by the solid-liquid separation device. As the solid-liquid separation device, mentioned can be the same device as described above. A part of the removed second flocs may be returned to the reaction tank 7 as seed crystals.

In the present invention, in order to remove the second flocs, instead of or in conjunction with the solid-liquid separation device (e.g., sedimentation tank 8) in the second flocculation sedimentation step, filtration using a multi-layer filtration membrane, an ultrafiltration membrane, filter sand 9, or the like may be performed for the solid-liquid separation (turbidity removal). This may suppress fouling of the reverse osmosis membrane. Backwash can be carried out when the filtration becomes inefficient. A waste water from the backwash may be solid-liquid separated in a sedimentation tank as necessary, and the supernatant water can be sent to the first flocculation sedimentation step. The slurry containing solids S5 obtained by the backwash can be evaporated to dryness together with the concentrated water. The liquid from which the second flocs have been removed can be sent to the membrane separation step (V) as the raw water.

Then, a membrane separation step (V) is performed. In the membrane separation step, a raw water (the liquid from which the first flocs have been removed or liquid from which the second flocs have been removed) is subjected to a separation treatment by reverse osmosis membrane 11 to divide into a permeated water P and a concentrated water C. A reverse osmosis membrane device to facilitate progress of the membrane separation step, comprises a reverse osmosis membrane 11, a raw water pressure device or a permeated water suction device, a flow path for supplying the raw water to the reverse osmosis membrane, a flow path for discharging the concentrated water from the reverse osmosis membrane, and a flow path for discharging the permeated water from the reverse osmosis membrane.

As the water temperature decreases, an amount of the permeated water through the reverse osmosis membrane decreases and a differential pressure required to obtain the same amount of the permeated water increases. Conversely, as the water temperature increases, the amount of the permeated water through the reverse osmosis membrane increases and a rejection ratio of salts decreases. Therefore, the temperature of the liquid is adjusted to preferably not less than 0 °C and not more than 85 °C, more preferably not less than 0 °C and not more than 45 °C, and still more preferably not less than 5 °C and not more than 35 °C, during the separation treatment by the reverse osmosis membrane. A temperature control device such as coolers, cooling towers 10, or heaters may be provided for adjusting the temperature of the liquid. Although an installation location of the temperature control device is not particularly limited, for example, it may be between the second flocculation sedimentation device and the reverse osmosis membrane device.

Examples of the reverse osmosis membrane can include a membrane made of cellulose acetate, a membrane made of aromatic polyamide, a membrane made of polyvinyl alcohol, a membrane made of polysulfone or the others. The reverse osmosis membrane is not limited by its configuration, and examples thereof can include a hollow fiber membrane, a spiral membrane, a tubular membrane, or the like.

The reverse osmosis membrane is preferably built into a membrane module. A case-housing type module comprises a membrane element stored in a casing, and the membrane element comprising a reverse osmosis membrane, a support body for the membrane and a channel member, and the reverse osmosis membrane, the support body and the channel member are integrated. As the case-housing type module, mentioned can be a pleat type module, a spiral type module, a monolith type module, a tube type module, a hollow fiber type module or the like.

Reverse osmosis membrane is impermeable to cations such as calcium ion ($Ca^{2+}$), sodium ion ($Na^+$), potassium ion ($K^+$), or iron ion ($Fe^{3+}$); anions such as sulfate ions ($SO_4^{2-}$), or chloride ion ($Cl^-$), and lead (Pb), mercury (Hg), cadmium (Cd), arsenic (As), and the like. The water permeated through the reverse osmosis membrane (permeated water) is one from which almost all contaminants contained in high hardness water have been removed. The permeated water can be subjected to sterilization treatment, final filtering, ion exchange treatment, or the like, as necessary, to make water conform to desired water quality standard. The permeated water can be reused in wet flue gas desulfurization or the like.

The concentrated water has a concentration ratio of preferably 1.1 to 3.0, more preferably 1.15 to 2.0, still more preferably 1.2 to 1.6. Part or all of the concentrated water is used in the crystallization step as described above. The remainder of the concentrated water can be evaporated to dryness together with the slurries S1 and S5 to form a dry solid D. For the evaporation to dryness process, a known evaporation to dryness device such as evaporator/dryer 12 can be employed. Evaporated water can be condensed and reused in wet flue gas desulfurization. Valuable components can be separated and collected from the dry solid as needed, and the residue can be disposed of. The concentration ratio is a ratio of a mass of calcium contained per unit mass of the concentrated water to a mass of calcium contained per unit mass of the raw water, and is calculated by the following formula. Concentration ratio = (mass of calcium contained per unit mass of concentrated water) / (mass of calcium contained per unit mass of raw water)

(EMBODIMENT 1)

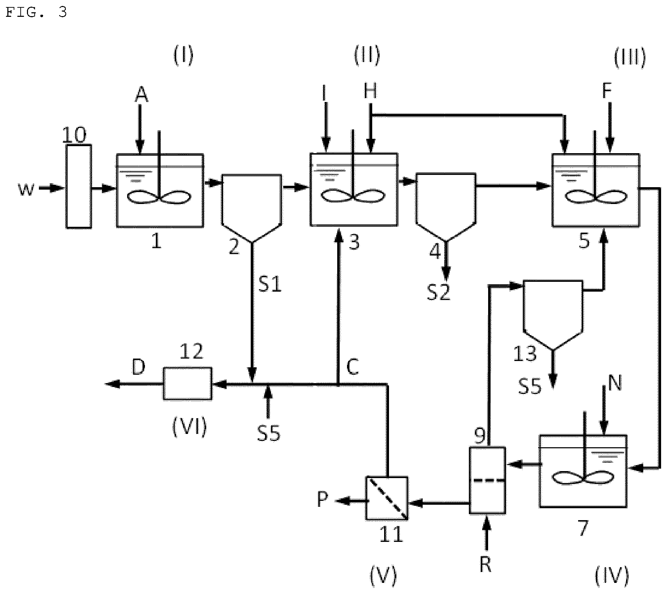

The high hardness water treatment apparatus (not forming part of the invention) shown in FIG. 3, comprises cooling tower 10, pH adjustment reaction tank 1, sedimentation tank 2, crystallization reaction tank 3, sedimentation tank 4, first flocculation sedimentation reaction tank 5, second flocculation sedimentation reaction tank 7, filtration device 9, reverse osmosis membrane 11 and evaporator/dryer 12. These were plumbed so that a liquid to be treated was flows in this order. A pipe was installed to supply a part of concentrated water C obtained by separation by the reverse osmosis membrane 11 to the crystallization reaction tank 3. A pipe was installed to supply a slurry of precipitated product S1 and a slurry of solids S5 together with the concentrated water C to the evaporator/dryer 12. A pipe for supplying an alkali metal hydroxide or water-soluble alkaline earth metal hydroxide A was installed in the pH adjustment reaction tank 1. A pipe for supplying an inorganic acid H and seed gypsum I was installed in the crystallization reaction tank 3. A pipe for supplying an inorganic acid H and iron-based coagulant F was installed in the first flocculation sedimentation reaction tank 5. A pipe for supplying an alkali metal hydroxide or water-soluble alkaline earth metal hydroxide N was installed in the second flocculation sedimentation reaction tank 7. A pH of the liquid in the pH adjustment reaction tank 1 was controlled to about 10, a pH of the liquid in the first flocculation sedimentation reaction tank 5 was controlled to about 4, a pH of the liquid in the second flocculation sedimentation reaction tank 7 was controlled to about 5. The pH controls were able to be carried out by measuring the pH and adjusting the flow rate of chemicals. The filtration device was equipped with a pipe for supplying backwash water R, a slurry discharged during backwashing was sent to the sedimentation tank 13 to be subjected to solid-liquid separation. Piping was provided to supply the supernatant water to the first flocculation sedimentation reaction tank 5.

(EMBODIMENT 2)

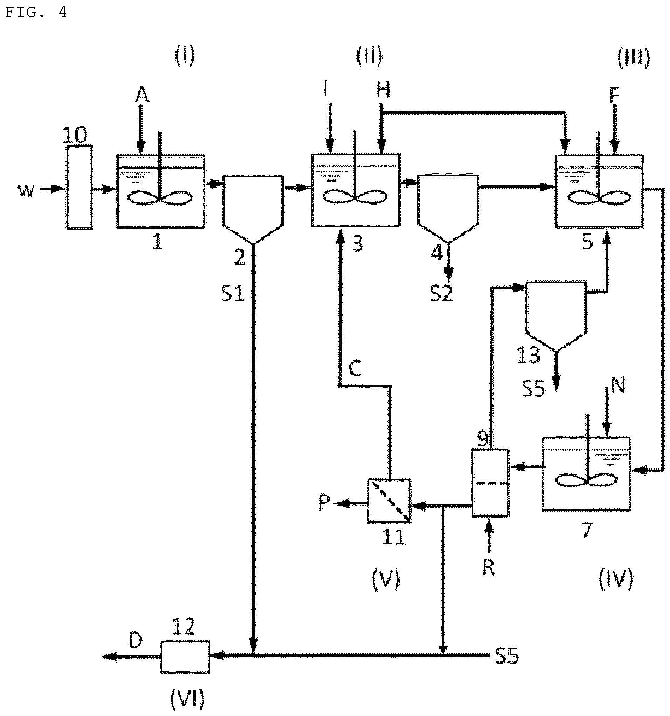

The high hardness water treatment apparatus shown in FIG. 4, was the same as the high hardness water treatment apparatus (not forming part of the invention) shown in FIG. 3 except that there was no piping for sending the remainder of the concentrated water C obtained by the separation by the reverse osmosis membrane 11 to the evaporator/dryer 12, a pipe was installed for supplying all of the concentrated water C to the crystallization reaction tank 3, and a pipe was installed to extract a part of the raw water from the pipe between the filtration device 9 and the reverse osmosis membrane 11 and send it to the evaporator/dryer 12. In the high hardness water treatment device shown in FIG. 4, since the slurry of the precipitated product S1 was diluted with the raw water, the risk of scale in the pipe for sending from the reverse osmosis membrane 11 to the evaporator/dryer 12 can be reduced.

(EMBODIMENT 3)

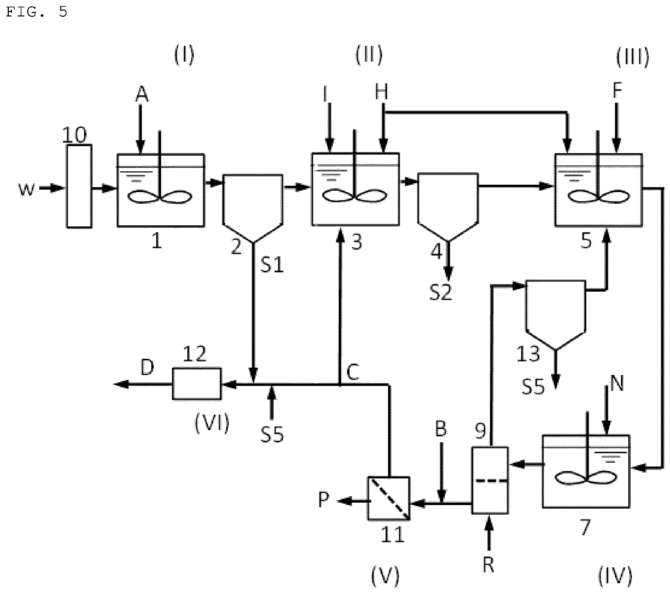

The high hardness water treatment apparatus (not forming part of the invention) shown in FIG. 5 was the same as the high hardness water treatment apparatus shown in FIG. 3 except that a pipe for supplying a scale preventive was installed between the filtration device 9 and the reverse osmosis membrane 11. As the scale preventive, mentioned can be citric acid. A pH of the liquid in the pH adjustment reaction tank 1 was controlled to about 10, a pH of the liquid in the crystallization reaction tank 3 was controlled to about 4, a pH of the liquid in the first flocculation sedimentation reaction tank 5 was controlled to about 4, and a pH of the liquid in the second flocculation sedimentation reaction tank 7 was controlled to about 5. Even if the concentration ratio of the reverse osmosis membrane was increased, the formation of scale was suppressed. Scale preventive generally becomes protonated in a low pH environment reducing the scale preventive effect. By lowering the pH of the liquid in the crystallization reaction tank 3, gypsum crystallization proceeds without being hindered by the scale preventive, and the supersaturation state of gypsum can be quickly dissolved.

(EMBODIMENT 4)

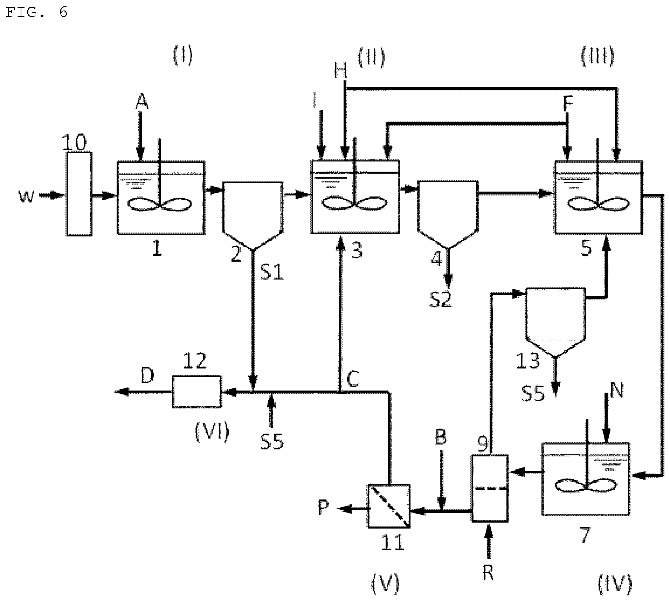

The high hardness water treatment apparatus (not forming part of the invention) shown in FIG. 6 was the same as the high hardness water treatment apparatus shown in FIG. 4 except that a pipe for supplying an iron-based flocculant was installed in the crystallization reaction tank 3. Scale preventive may inhibit crystallization. Supplying the scale preventive to the reverse osmosis membrane and supplying the iron-based flocculant to the crystallization reaction tank 3 were able to effect both of crystallization due to dissolution of gypsum supersaturation in the crystallization reaction tank 3 and prevention of scale due to concentrating of the raw water in the reverse osmosis membrane. In particular, the effect of the present embodiment is great for operation when the scale preventive is supplied in a large amount in order to increase the concentration ratio in the reverse osmosis membrane.

CODE LIST

(I) pH adjustment device
(II) crystallization device
(III) first flocculation sedimentation device
(IV) second flocculation sedimentation device
(V) reverse osmosis membrane device
(VI) evaporation to dryness device

1 : Reaction tank for pH adjustment
2 : Sedimentation tank for pH adjustment
3 : Reaction tank for crystallization
4 : Sedimentation tank for crystallization
5 : Reaction tank for first flocculation sedimentation
6 : Sedimentation tank for first flocculation sedimentation
7 : Reaction tank for second flocculation sedimentation
8 : Sedimentation tank for second flocculation sedimentation
9 : filtration device
10 : cooling tower
11 : reverse osmosis membrane
12 : evaporator/dryer

15 : Wet flue gas desulfurization equipment main unit (gas absorption equipment)
16 : chimney
17 : gas flue (flow path for feeding combustion exhaust gas)
18 : apparatus for treating water having a high water hardness
25 : gypsum
26 : Gypsum separator (dehydrator)
27 : Gypsum dewatering filtrate tank
28 : Desulfurization waste water tank
29 : Calcium carbonate slurry preparation tank
W : High hardness water
A : alkali metal hydroxide or water-soluble alkaline earth metal hydroxide
H : inorganic acid
I : seed gypsum
F : iron-based flocculant
G : polymer coagulant
N : alkali metal hydroxide or water-soluble alkaline earth metal hydroxide
P : permeated water
C : Concentrated water
D : dry solid
R : backwash water
S1 : precipitated product
S2 : crystalized product
S3 : first flocs
S4 : second flocs
S5 : backwashed solid
B : scale preventive

**Claims**

1. A method for treatment of high hardness water, comprising :

subjecting a raw water to a separation treatment using a reverse osmosis membrane (11) to divide the raw water into a permeated water (P) and a concentrated water (C),
adding an alkali metal hydroxide or water-soluble alkaline earth metal hydroxide (A) to a high hardness water (W) containing calcium and magnesium so that pH of the high hardness water is 9.5 to 11.5 to obtain a precipitated product (S1) and removing the precipitated product (S1) to obtain a precipitated product removed liquid, **characterized by** comprising the following steps:

adding an inorganic acid (H) and part or all of the concentrated water (C) to the precipitated product removed liquid so that pH of the precipitated product removed liquid is not less than 2.5 to obtain a crystallized product (S2) and removing the crystallized product (S2) to obtain a crystallized product removed liquid, and
adding an iron-based flocculant (F) to the crystallized product removed liquid so that pH of the crystallized product removed liquid is 2.5 to 4.5 to obtain first flocs (S3) and removing the first flocs (S3) to obtain the raw water.

2. The method for treatment of high hardness water according to claim 1, further comprising :
adding an alkali metal hydroxide or water-soluble alkaline earth metal hydroxide (N) to the first flocs (S3) removed liquid so that pH of the first flocs removed liquid is 4.5 to 6.5 to obtain second flocs (S4)and removing the second flocs (S4) to obtain the raw water.

3. The method according to claim 1 or 2, further comprising adding a seed gypsum (I) to the precipitated product removed liquid.

**Patentansprüche**

1. Verfahren zur Aufbereitung von Wasser mit hohem Härtegrad, umfassend:

Durchführen einer Trennbehandlung an Rohwasser unter Verwendung einer Umkehrosmosemembran (11), um das Rohwasser in Permeatwasser (P) und Konzentratwasser (C) zu trennen,
Zugeben eines Alkalimetallhydroxids oder eines wasserlöslichen Erdalkalimetallhydroxids (A) zu einem Wasser (W) mit hohem Härtegrad, das Calcium und Magnesium enthält, so dass der pH-Wert des Wassers mit hohem Härtegrad 9,5 bis 11,5 beträgt, um ein Fällungsprodukt (S1) zu erhalten, und Entfernen des Fällungsprodukts (S1), um eine von dem Fällungsprodukt befreite Flüssigkeit zu erhalten, **gekennzeichnet dadurch, dass** es die folgenden Schritte umfasst:

Zugeben einer anorganischen Säure (H) und eines Teils oder des gesamten konzentrierten Wassers (C) zu der von dem Fällungsprodukt befreiten Flüssigkeit, so dass der pH-Wert der von dem Fällungsprodukt befreiten Flüssigkeit nicht unter 2,5 liegt, um ein kristallisiertes Produkt (S2) zu erhalten, und Entfernen des kristallisierten Produkts (S2), um eine von dem kristallisierten Produkt befreite Flüssigkeit zu erhalten, und
Zugeben eines Flockungsmittels auf Eisenbasis (F) zu der von dem kristallisierten Produkt befreiten Flüssigkeit, so dass der pH-Wert der von dem kristallisierten Produkt befreiten Flüssigkeit 2,5 bis 4,5 beträgt, um erste Flocken (S3) zu erhalten, und Entfernen der ersten Flocken (S3), um das Rohwasser zu erhalten.

2. Verfahren zur Aufbereitung von Wasser mit hohem Härtegrad nach Anspruch 1, ferner umfassend:
Zugeben eines Alkalimetallhydroxids oder eines wasserlöslichen Erdalkalimetallhydroxids (N) zu der von ersten Flocken (S3) befreiten Flüssigkeit, so dass der pH-Wert der von ersten Flocken befreiten Flüssigkeit 4,5 bis 6,5 beträgt, um zweite Flocken (S4) zu erhalten, und Entfernen der zweiten Flocken (S4), um das Rohwasser zu erhalten.

3. Verfahren nach Anspruch 1 oder 2, ferner umfassend das Zugeben von Keimgips (I) zu der von dem Fällungsprodukt befreiten Flüssigkeit.

**Revendications**

1. Méthode de traitement d'eau de haute dureté, comprenant :

le fait de soumettre une eau brute à un traitement de séparation à l'aide d'une membrane d'osmose inverse (11) pour diviser l'eau brute en une eau filtrée (P) et une eau concentrée (C),
l'ajout d'un hydroxyde de métal alcalin ou d'un hydroxyde de métal alcalino-terreux soluble dans l'eau (A) à une eau de haute dureté (W) contenant du calcium et du magnésium de sorte que le pH de l'eau de haute dureté est de 9,5 à 11,5 pour obtenir un produit précipité (S1) et l'élimination du produit précipité (S1) pour obtenir un liquide à produit précipité éliminé, caractérisée en qu'elle comprend les étapes suivantes :

l'ajout d'un acide inorganique (H) et d'une partie ou de la totalité de l'eau concentrée (C) au liquide à produit précipité éliminé de sorte que le pH du liquide à produit précipité éliminé n'est pas inférieur à 2,5 pour obtenir un produit cristallisé (S2) et l'élimination du produit cristallisé (S2) pour obtenir un liquide à produit cristallisé éliminé, et
l'ajout d'un floculant à base de fer (F) au liquide à produit cristallisé éliminé de sorte que le pH du liquide à produit cristallisé éliminé est de 2,5 à 4,5 pour obtenir des premiers flocs (S3) et l'élimination des premiers flocs (S3) pour obtenir l'eau brute.

2. Méthode de traitement d'eau de haute dureté, selon la revendication 1, comprenant en outre :
l'ajout d'un hydroxyde de métal alcalin ou d'un hydroxyde de métal alcalino-terreux soluble dans l'eau (N) au liquide à premiers flocs (S3) éliminés de sorte que le pH du liquide à premiers flocs éliminés est de 4,5 à 6,5 pour obtenir des seconds flocs (S4) et l'élimination des seconds flocs (S4) pour obtenir l'eau brute.

3. Méthode selon la revendication 1 ou 2, comprenant en outre l'ajout d'un germe de gypse (I) au liquide à produit précipité éliminé.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015068982 A1
- WO 2017133511 A1
- JP 51093789 A
- JP 2011200788 A
- JP 5303501 B
- JP 2017136570 A
- JP H10137540 A
- US 2019077686 A1